Europäisches Patentamt

(19) European Patent Office

Office européen des brevets

(11) Publication number: **0 221 862 B1**

## (12) EUROPEAN PATENT SPECIFICATION

(45) Date of publication of patent specification :
**10.04.91 Bulletin 91/15**

(51) Int. Cl.⁵ : **B60K 17/16,** // B60K17/36,
B60K17/34

(21) Application number : **86830322.3**

(22) Date of filing : **05.11.86**

(54) Motor-vehicle transmission system.

(30) Priority : **05.11.85 IT 6792585**

(43) Date of publication of application :
**13.05.87 Bulletin 87/20**

(45) Publication of the grant of the patent :
**10.04.91 Bulletin 91/15**

(84) Designated Contracting States :
**AT BE CH DE ES FR GB GR IT LI LU NL SE**

(56) References cited :
DE-A- 2 014 751
FR-A- 1 539 811
FR-A- 1 550 241
GB-A- 476 619
GB-A- 743 027
GB-A- 1 031 854

(56) References cited :
US-A- 1 638 228
US-A- 1 791 138
US-A- 1 856 748
US-A- 1 863 974

(73) Proprietor : PERFORMANCE TECHNOLOGY
OF ITALY - ALBA TECH S.R.L. (briefly P.T.I. -
ALBA TECH S.R.L.)
Via Magenta, 44/A
I-10128 Torino (IT)

(72) Inventor : Stirano, Giorgio
Via Fornace 27
I-12064 La Morra (Cuneo) (IT)

(74) Representative : Notaro, Giancarlo et al
c/o Jacobacci-Casetta & Perani S.p.A. Via
Alfieri, 17
I-10121 Torino (IT)

Jouve, 18, rue Saint-Denis, 75001 PARIS

**Description**

The present invention relates to transmissions for motor vehicles having at least one front driving axle and at least one rear driving axle, of the type comprising :

a front transmission shaft,

a rear transmission shaft,

a transmission housing from which the front and rear transmission shafts project and which receives torque from the engine-gearbox unit,

a differential unit associated with each axle, comprising a housing from which project two drive shafts for transmitting torque to the respective wheels of the motor vehicle, an epicyclic train in the housing for distributing torque between the two drive shafts, including a spider rotatably supported in the housing about an axis perpendicular to the vertical longitudinal plane of the motor vehicle, and a hypoid gear pair consisting of a hypoid crown wheel connected to the spider and a hypoid pinion carried by a shaft rotatably supported by the housing of the differential about a longitudinal axis spaced vertically from the axis of the hypoid crown wheel,

in which the differential unit associated with the front axle has its hypoid pinion located behind the axis of the corresponding crown wheel and spaced upwardly of the axis of the crown wheel.

A transmission of the type indicated above is illustrated in FR-A-1 550 241.

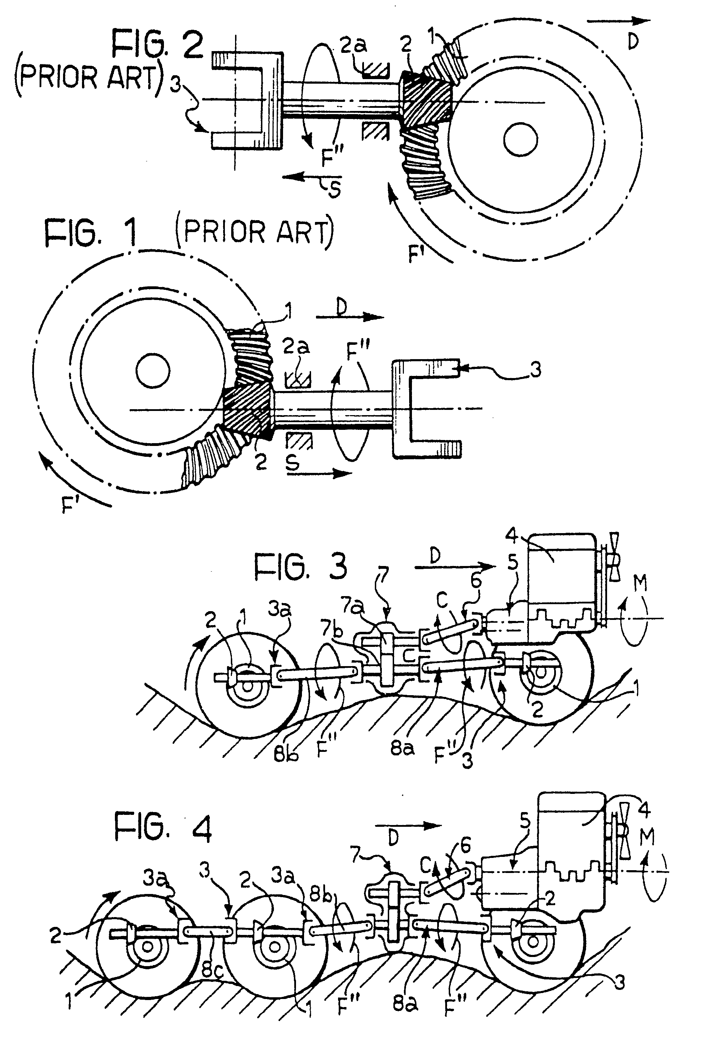

The use of hypoid gears for the pairs of bevel reduction gears for the differentials of motor vehicles with several driving axles has been known for some time. The peculiar characteristic of hypoid gear pairs, consisting of the fact that the axes of the pinion and the crown wheel of the pair are spaced vertically from each other, has been used in the past for two opposing reasons. In a first conventional technique, the pinion of the hypoid pair is located with its axis spaced downwardly of the axis of the crown wheel, in order to keep the transmission shaft, and consequently the plane of the bodywork of the motor vehicle, at a relatively low level. In a second known technique, used less, the pinion is located with its axis spaced upwardly of the axis of the crown wheel in order to keep the transmission shaft at a high level, which is preferable in motor vehicles which will travel over rough ground. The first of these two techniques is illustrated schematically in Figure 1 of the appended drawings. This Figure shows, in side elevation, the hypoid reduction gear pair of the differential of a rear axle of a motor vehicle. The arrow D indicates the direction of forward movement of the motor vehicle. The crown wheel and the pinion of the hypoid pair are indicated 1, 2 respectively. The shaft carrying the pinion 2 is supported at 2a by the housing of the differential (not illustrated) with one end projecting forwardly of the housing and having a fork 3 for its cardanic connection to the transmission shaft (not illustrated) of the motor vehicle. Arrows F′ and F″ indicate the senses of rotation of the crown wheel 1 and of the pinion 2 corresponding to forward movement of the motor vehicle. Finally, arrow S indicates the direction of the axial thrust to which the pinion 2 is subject due to its meshing with the crown wheel 1 during forward movement of the vehicle. The resulting force applied by the pinion 2 to the crown wheel in the zone of contact in fact has a component along the axis of the pinion which is directed rearwardly (that is, towards the left with reference to Figure 1) so that the corresponding reaction of the crown wheel on the pinion 2 has the direction indicated by the arrow S. This situation corresponds to the optimum condition in that, for the drive to be transmitted from the pinion to the crown wheel silently and with a high performance, it is necessary for the axial thrust to which the pinion is subject to tend to move the pinion away from the crown wheel.

The known method described above has several disadvantages. In the first place, it is obviously not adaptable to motor vehicles also intended to travel over rough ground, it being preferable in this case for the transmission shaft to be at a relatively high level above the ground. In the second place, it does not allow particularly simple transmissions to be produced for motor vehicles with several driving axles. In the case, for example, of a motor vehicle with a front driving axle and a rear driving axle which has a unit such as that illustrated in Figure 1, it is not possible, in practice, to use the same differential unit for the front axle as that used for the rear axle, essentially for the following reason. As illustrated in Figure 1, the shaft carrying the pinion 2 has only one end projecting from the housing of the differential. It follows that, if the same unit were to be used for the front axle, the unit would have to be rotated through 180° in a horizontal plane for this use, so as to be disposed with the fork 3 projecting rearwardly and with the crown wheel 1 located to the right (with reference to an observer looking in the direction of advance of the motor vehicle) relative to the pinion 2. In other words, Figure 1 could also refer to a unit used in a front axle but in this case the direction of advance of the motor vehicle would be towards the left (with reference to the drawing) and the crown wheel 1 would rotate in an anticlockwise sense. In this case, therefore, the pinion would be subject to an axial thrust tending to move it closer to the crown wheel, with resulting disadvantages of noise and poor performance from the transmission.

The other known method which has been mentioned above, in which the pinion of the hypoid gear pair is spaced upwardly of the axis of the crown wheel, is illustrated schematically in Figure 2 (parts similar to those of Figure 1 are indicated by the same reference numerals) for the case of a front driving axle of a motor vehicle. A front axle provided with a unit of this type is illustrated, for example, in Figure 1 of FR-A-1 550 241. Again in this case, the arrows D, F', F" and S indicate respectively the direction of advance of the motor vehicle, the senses of rotation of the crown wheel 1 and the pinion 2, and the direction of the axial thrust to which the pinion is subjected during forward movement of the motor vehicle. Again with this solution, if it is wished to use a unit identical to that illustrated in Figure 2 for the rear axle of a motor vehicle, it would be necessary to locate the unit in a position rotated through 180° so that the fork 3 projects forwardly and the crown wheel 1 is located to the right of the pinion 2. During movement of the motor vehicle, the pinion of the rear differential unit would then be subject to an axial thrust tending to move it closer to the crown wheel, with the resulting disadvantages of noise and poor performance.

For the aforesaid reasons, recourse has often been made in the prior art to completely different differential units for the transmission of torque to the various axles of the motor vehicle or to the use of relatively complicated transmissions for the interconnection of the various axles, as mentioned in the discussion of the prior art in FR-A-1 550 241. The solution described and illustrated in this latter document constitutes an attempt at a simplified transmission for motor vehicles with several driving axles with differentials provided with hypoid reduction gear pairs. However, this solution still involves the use of different transmissions for the various driving axles of the motor vehicle.

The object of the present invention is to provide a transmission which enables the transmission shaft of the motor vehicle to be located at a high level and which also enables all the problems explained above to be overcome, resulting in a simple and cheap construction.

In order to achieve this object, the invention provides a transmission of the type specified at the beginning of the present specification, characterised by the combination of the following characteristics :

a) the differential units associated with the axles of the motor vehicle are all identical to each other and oriented in an identical manner, with the crown wheels all located on the same side with respect to the pinions,

b) the pinions of all the differential units are spaced upwardly and rearwardly (with reference to the direction of forward movement of the motor vehicle) relative to the axes of the respective crown wheels,

c) the pinion-carrying shaft of each differential unit passes through the entire longitudinal extent of the housing of the differential and has its ends projecting respectively from a front wall and a rear wall of the housing for coupling to the respective transmission shaft.

The invention will now be described with reference to the appended drawings provided purely by way of non-limiting example, in which :

Figures 1 and 2 illustrate two hypoid gear pairs used in the prior art as described in the introduction to the present specification,

Figures 3, 4 and 5 are diagrammatic side views of the transmission of the invention according to three possible variants,

Figure 6 illustrates a detail of Figure 4 diagrammatically and on an enlarged scale,

Figure 7 is a sectional view of one embodiment of the detail of Figure 6,

Figures 8 and 9 correspond to two possible variants of a section taken on the line VII-VII of Figure 7, and

Figure 10 is a perspective view of the differential unit of Figures 7 and 8.

Figure 3 illustrates the mechanical part of a motor vehicle with a front driving axle and a rear driving axle, provided with the transmission device according to the invention. The internal combustion engine of the motor vehicle is indicated 4 and has an associated gearbox 5. The output shaft of the gearbox 5 is connected by a cardan shaft 6 to a transmission housing 7 from which a front transmission shaft 8a and a rear transmission shaft 8b extend for transmission of the drive torque to the front axle and the rear axle respectively (in Figure 3 the arrow D indicates the direction of forward movement of the motor vehicle). Each of the two axles of the motor vehicle has a differential unit for distributing torque between the two wheels of the axle. This differential unit has an associated pair of hypoid reduction gears (which will be described in detail below) including a hypoid crown wheel 1 joined to the spider of the differential and a hypoid pinion 2 which is driven by the respective transmission shaft.

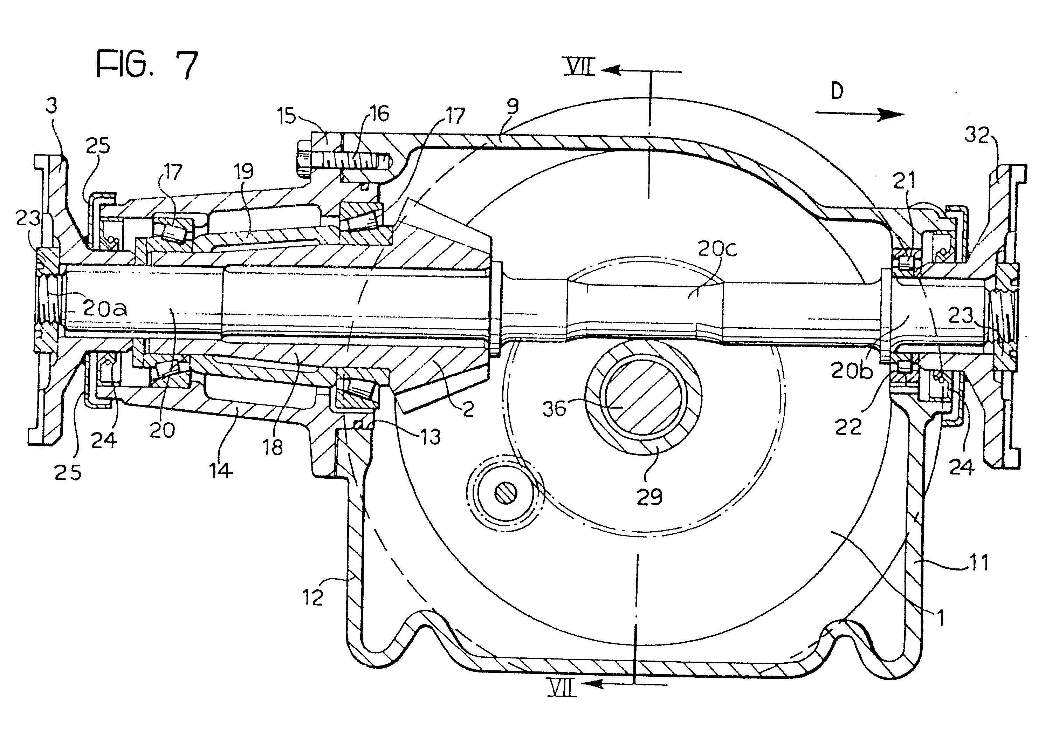

The pinion 2 of each differential unit is displaced upwardly and rearwardly (with reference to the direction of forward movement of the motor vehicle) of the axis of the respective crown wheel 1. This gives a series of advantages. In the first place, the transmission shafts 8a, 8b are well spaced from the ground, which makes the motor vehicle suitable for travelling over rough ground, as illustrated schematically in Figure 3. In the second place, the differential units associated with the two driving axles of the motor vehicle are absolutely identical to each other and are oriented in the same way. In the case illustrated, both the crown wheels 1 of the two differential units are disposed to the left of the two pinions 2. As will be explained in detail below, each pinion 2 is also subject to an axial thrust which tends to move it away from its crown wheel, favouring the silent operation and performance of the transmission. In order to allow the connection of the pinion 2 of the rear differential to the rear transmission shaft 8b, the shaft carrying the pinion of each differential unit extends over the entire longitudinal extent of the respective housing (as will be described below with reference to Figure 7) with its ends projecting forwardly and rearwardly from the housing. The front end of the pinion-carrying shaft of the rear differential unit is provided with a fork 3a for its cardanic connection to the shaft 8b which, in its turn, is connected at its opposite end to the transmission housing 7 by a cardan coupling. Similarly, the rear end of the pinion-carrying shaft of the front differential unit has a fork 3 for its cardanic connection to the front transmission shaft 8a which, in its turn, is connected at its rear end to the transmission housing 7 by a cardan coupling.

In addition to the simplification resulting from the fact that the differential units of the two driving axles are absolutely identical to each other and identically oriented, the device according to the invention allows a further simplification as regards the transmission housing 7. In the case of internal combustion engines of conventional type for heavy motor vehicles, the driving shaft, which is arranged parallel to the longitudinal axis of the motor vehicle, rotates in a clockwise sense (arrow M in Figure 3) when seen from the front. The gearbox 5 therefore has its main shaft which rotates in the sense indicated by the arrow M and its output shaft which, in the examples currently produced (manually controlled or automatically controlled), rotates in the same sense (arrow C in Figure 3). The sense of rotation of the transmission shafts 8a, 8b corresponding to forward movement of the motor vehicle, however, is that indicated by the arrows F″ in Figure 3. This means that, in order to allow the transmission of drive from the shaft 6 to the two transmission shafts 8a, 8b, a transmission housing constituted by a pair of gears 7a, 7b is sufficient. When, for example, the rear axle is to be provided with a hypoid gear pair of the known type illustrated in Figure 1, however, the sense of rotation of the transmission shaft 8b should be that indicated in Figure 1, which opposite that indicated in Figure 3. This would necessitate the use of a transmission housing 7 including a train of three gears to ensure that the transmission shaft 8b rotates in the same sense as the shaft 6.

Figure 4 illustrates a motor vehicle with a front driving axle and two rear driving axles, provided with a transmission device according to the invention. In Figure 4, the parts in common with Figure 3 are indicated by the same reference numerals. As shown, in the case of Figure 4, the rear transmission shaft includes a further portion 8c for connection between the differential units of the two rear axles. Again in this case, all the differential units are absolutely identical to each other and identically oriented, each with its pinion 2 displaced upwardly and rearwardly of the axis of its respective crown wheel. The ends of the pinion-carrying shaft of the differential unit associated with the rear axle which is closest to the transmission housing 7 are provided with forks 3a, 3 for their cardanic connection to the two shafts 8b, 8c. All the advantages which have been described above also apply to the case of Figure 4. Naturally, the advantage of simplification resulting from the fact that it is possible to use a single type of differential unit for all the axles is even more noticeable with a larger the number of axles.

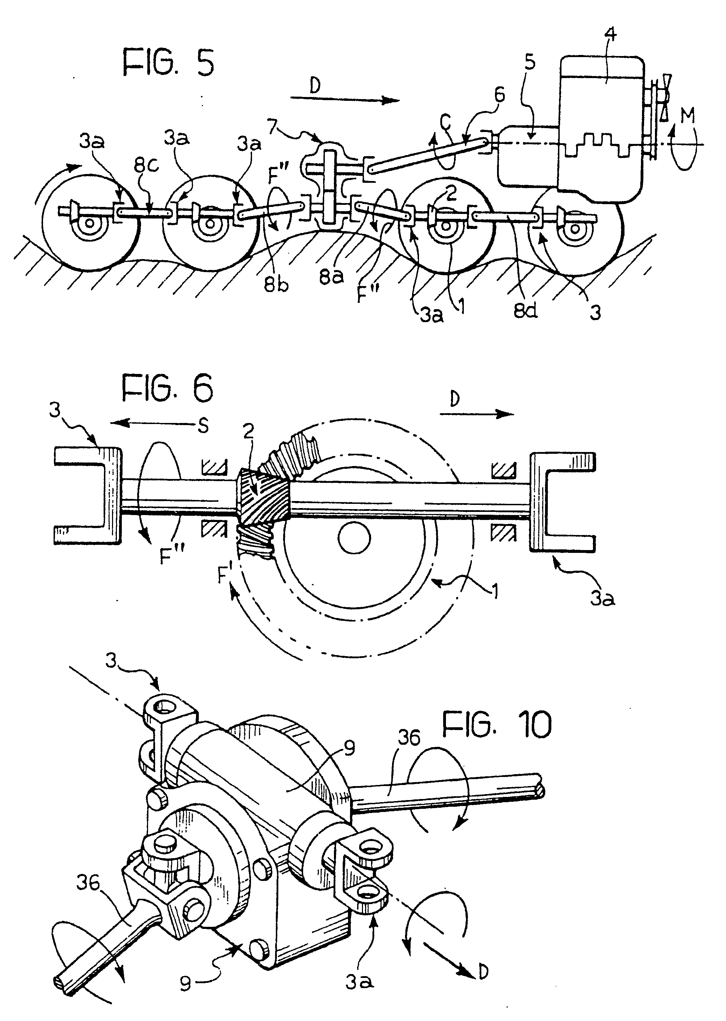

Figure 5 relates to the case, for example, of a motor vehicle with two front driving axles and two rear driving axles. In this Figure, the parts in common with Figures 3 and 4 are indicated by the same reference numerals. The only difference from the case of Figure 4 lies in the fact that, as a result of the presence of a further front axle, a further portion 8d of the front transmission shaft is provided for connecting the two pinion-carrying shafts of the two front differential units. The pinion-carrying shaft of the front differential which is closest to the transmission housing 7 has its ends provided with forks 3, 3a for cardanic connection to the two portions 8a, 8d of the front transmission shaft.

Figure 6 illustrates schematically, on an enlarged scale, the differential unit usable equally well for all the axles of the vehicles illustrated in Figures 3 to 5. In the case of Figure 6, both ends of the shaft carrying the pinion 2 have forks 3, 3a, as in the case of the rear differential of the vehicle of Figure 4 which is closest to the transmission housing 7 or as in the case of the front and rear differentials of the vehicle of Figure 5 which are closest to the transmission housing 7. The arrows F′ and F″ in Figure 6 indicate the senses of rotation of the crown wheel 1 and the pinion 2. The arrow D indicates the direction of advance of the motor vehicle and the arrow S indicates the direction of the axial thrust to which the pinion is subject as a result of its meshing with the crown wheel. As is seen, this thrust tends to move the pinion away from the crown wheel, enabling the torque to be transmitted correctly.

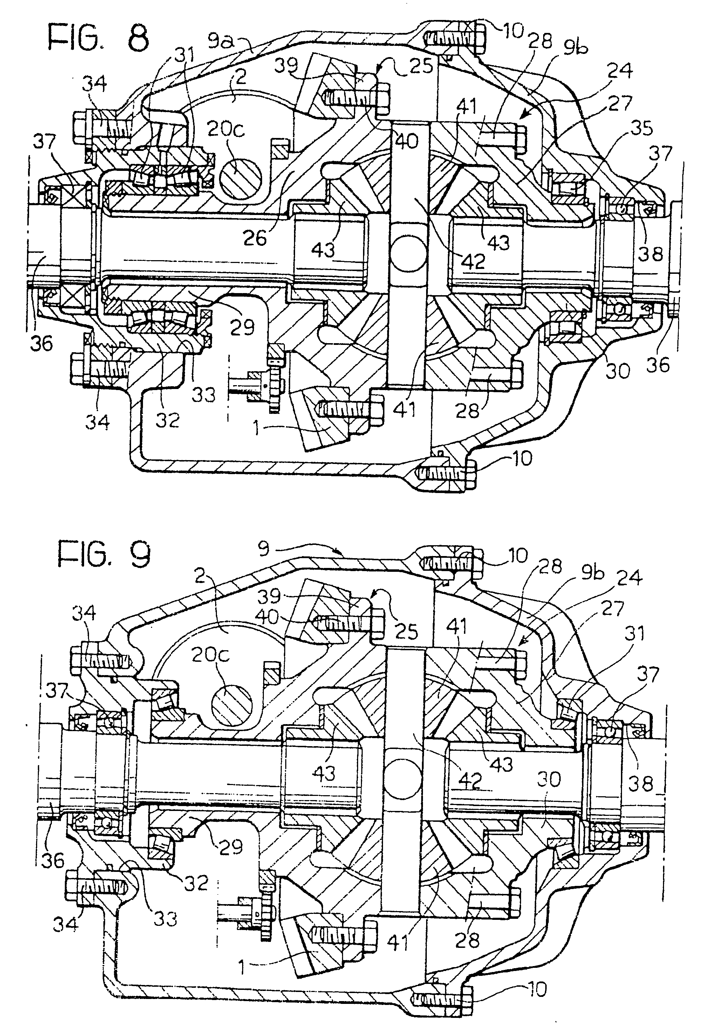

Figure 7 illustrates a constructional solution of the differential unit illustrated in Figure 6. This unit includes a housing 9 which is made of light alloy or cast iron and includes two housing portions 9a, 9b (see Figures 8 and 9) interconnected by screws 10. The housing 9 has a front wall 11 and a rear wall 12 (Figure 7) with an aperture 13 within which there is sealed one end of a tubular body 14 having a flange 15 fixed to the housing 9 by screws 16. The tubular body 14 rotatably supports a tubular shaft 18 incorporating the hypoid pinion 2 by means of two tapered roller bearings 17. The inner rings of the two bearings 17 are spaced axially from each other by means of a spacer ring 19. The tubular shaft 18 is keyed onto a shaft 20 having an end 20a projecting from the tubular body 14. At the other side, the shaft 20 passes through the entire length of the housing and has its opposite end 20b rotatably supported by a roller bearing 21 in an aperture 22 in the front wall 11 of the housing 9 of the differential unit. In the case illustrated in Figure 7, both the ends 20a and 20b of the shaft 20 have forks 3, 3a for their cardanic connection to respective portions of the transmission shaft. Each fork is retained axially on the shaft 20 by means of a ring rout 23 screwed onto a threaded end portion of the shaft 20. At the outer end of the tubular body 14 there is also a sealing washer 24 with an associated oil splash guard disc 25. The shaft 20 has a smaller-diameter portion 20c for preventing interference with the spider of the differential (Figures 8 and 9), as will be described in detail below.

With reference to Figure 8, within the housing 9 there is a differential 24 including a spider 25 constituted by two bodies 26, 27 interconnected by screws 28. The spider 24 has two end hubs 29, 30. The hub 29 is rotatably supported through two tapered roller bearings 31 by an annular element 32 which is sealed in an aperture 33 of the housing portion 9a and which is locked in this position by screws 34. The end hub 30 of the spider 24 is rotatably supported by the housing portion 9b by means of a radial roller bearing 35. The solution illustrated in Figure 8 relates to the case in which the housing of the differential is made of light alloy. The axial bearings 31 are located only at one end of the spider to allow those relative movements between the opposite end 30 of the spider and the housing of the differential resulting from the different thermal expansions of the spider and of the housing. Two drive shafts 36 (partially illustrated in Figures 8 and 9) for transmitting torque to the two wheels of the axle project laterally from the housing of the differential. The drive shafts 36 are rotatably supported through ball bearings 37 by the annular body 32 and within an aperture 38 of the housing body 9b, respectively. The spider 25 has a circumferential flange 39 to which the hypoid crown wheel 1 is fixed by screws 40. The torque transmitted to the spider 25 through the hypoid gear pair 1, 2 is distributed between the two axles 36 by means of an epicyclic train including planet wheels 41 freely rotatable on a pin 42 fixed to the spider 25 and planet wheels 43 meshing with the planet wheels 41 and keyed to the inner ends of the two drive shafts 36. As is clear from Figure 8, the smaller-diameter portion 20c of the shaft 20 carrying the pinion 2 is located outside the spider 25 in correspondence with a smaller-diameter portion of the end hub 29.

Figure 10 illustrates in perspective the differential unit, as seen from the exterior, in the case of an axle with independent wheels. As already fully described above, this unit can be used identically and with the same orientation for all the driving axles of the motor vehicle. Clearly, the invention also applies to the case of rigid axles.

Figure 9 illustrates a variant of Figure 8 which relates to the case in which the housing 9 of the differential is of cast iron. In this case, the spider is rotatably supported by the housing 9 solely by means of two tapered roller bearings 31 located in correspondence with the two end hubs 29, 30.

Naturally, the principle of the invention remaining the same, the constructional details and forms of embodiment may be varied widely with respect to that described and illustrated purely by way of example, without thereby departing from the scope of the present invention.

For example, it is possible to interpose a differential between two adjacent driving axles (such as the two rear axles or the two front axles of the vehicle of Figure 5) in order to distribute the torque between these axles.

There is also the possibility of providing devices for breaking the connection between one or more axles and the engine. Finally, the transmission housing 7 may include a differential for distributing the torque between the front axle and the rear axle.

## Claims

1. Transmission for motor vehicles having at least one front driving axle and a rear driving axle, comprising

    a front transmission shaft (8a, 8d),
    a rear transmission shaft (8b, 8c),
    a transmission housing (7) from which the front and rear transmission shafts project and which receives torque from the engine-gearbox unit (4, 5),
    a differential unit associated with each axle, comprising a housing (9) from which project two drive shafts (36) for transmitting torque to the respective wheels of the motor vehicle, an epicyclic train in the housing (9) for distributing torque between the two drive shafts (36), including a spider (25) rotatably supported in the housing (9) about an axis perpendicular to the vertical longitudinal plane of the motor vehicle, and a hypoid gear pair (1, 2) consisting of a hypoid crown wheel (1) connected to the spider (25) and a hypoid pinion (2) carried by a shaft (18, 20) rotatably supported by the housing of the differential (9) about a longitudinal axis spaced vertically from the axis of the hypoid crown wheel (1), in which the differential unit associated with the front axle has its hypoid pinion (2) located rearwardly of the axis of the corresponding crown wheel and spaced upwardly of the axis of the crown wheel (1), characterised by the combination of the following characteristics :

    a) the differential units associated with the axles of the motor vehicle are all identical to each other and oriented in an identical manner, with the crown wheels (1) all located on the same side with respect to the pinions (2),
    b) the pinions of all the differential units are spaced upwardly and rearwardly (with reference to the direction of movement of the motor vehicle) relative to the axes of the respective crown wheels (1),

c) the pinion-carrying shaft (18, 20) of each differential unit passes through the entire longitudinal extent of the housing (9) of the differential and has its ends projecting respectively from a front wall (11) and a rear wall (12, 14) of the housing (9) for coupling to the respective transmission shaft.

2. Transmission according to Claim 1, characterised in that the hypoid gear pairs (1, 2) are arranged so that the forward movement of the motor vehicle is driven by rotation of the front and rear transmission shafts in an anti-clockwise sense, as seen from the front.

3. Transmission according to Claim 1, characterised in that the ends of the pinion-carrying shaft (18, 20) projecting from the housing (9) of the differential have means for the connection of forks (3, 3a) for cardanic coupling to corresponding portions of the transmission shaft.

**Ansprüche**

1. Transmission für Motorfahrzeuge, die wenigstens eine vordere Antriebsachse und eine hintere Antriebsachse aufweisen, mit :

einer vorderen Transmissionswelle (8a, 8d), einer hinteren Transmissionswelle (8b, 8c), einem Transmissionsgehäuse (7), von welchem die vordere und die hintere Transmissionswelle vorstehen und welches das Drehmoment von der Maschinen-Getriebe-Einheit (4, 5) empfängt, einer mit jeder Achse verbundenen Differentialeinheit, die ein Gehäuse (9), von welchem zwei Antriebswellen (36) für die Drehmomentübertragung zu den jeweiligen Rädern des Motorfahrzeuges vorstehen, und eine epizyklische Getriebeeinrichtung in dem Gehäuse (9) zur Verteilung des Drehmomentes zwischen den zwei Antriebswellen (36) umfaßt, wobei die Getriebeeinrichtung ein in dem Gehäuse (9) um eine Achse senkrecht zu der vertikalen Längsebene des Motorfahrzeuges drehbar gehaltertes Drehkreuz (25), und ein Hypoidzahnradpaar (1, 2) enthält, welches aus einem Hypoidkronenrad (1), das mit dem Drehkreuz (25) verbunden ist, und aus einem durch eine Welle (18, 20) getragenen Hypoidritzel (2) besteht, wobei die Welle (18, 20) durch das Differentialgehäuse (9) um eine vertikal von der Achse des Hypoidkronenrades (1) beabstandete Langsachse drehbar gehaltert ist, wobei das Hypoidritzel (2) bei der der vorderachse zugeordneten Differentialeinheit rückwärtig von der Achse des entsprechenden Kronenrades und nach oben beabstandet zu der Achse des Kronenrades (1) angeordnet ist, **gekennzeichnet durch** die Kombination der folgenden Mermale :

a) die den Achsen des Motorfahrzeugs zugeordneten Differentialeinheiten sind zueinander alle identisch und in indentischer Weise ausgerichtet, wobei die Kronenräder (1) alle auf derselben Seite in bezug auf die Ritzel (2) angeordnet sind,

b) die Ritzel aller Differentialeinheiten sind nach oben und nach hinten (in bezug auf die Richtung der Bewegung des Motorfahrzeugs) relativ zu den Achsen der jeweiligen Kronenräder (1) angeordnet,

c) die Ritzelträgerwelle (18, 20) von jeder Differentialeinheit verläuft über die gesamte Längsausdehnung des Differentialgehäuses (9) und seine Enden stehen von einer Vorderwand (11) bzw. einer Rückand (12, 14) des Gehäuses (9) zur Kopplung an die Jeweilige Transmissionswelle vor.

2. Transmission nach Anspruch 1, **dadurch gekennzeichnet,** daß die Hypoidzahnradpaare (1, 2) so angeordnet sind, daß die vorwärtsbewegung des Motorfahrzeuges durch Drehung der vorderen und hinteren Transmissionswelle in einem Antiuhrzeigersinn, von der Vorderseite aus gesehen, erfolgt.

3. Transmission nach Anspruch 1, **dadurch gekennzeichnet,** daß die Enden der Ritzelträgerwelle (18, 20), die von dem Differentialgehäuse (9) vorstehen, eine Einrichtung für die Verbindung von Gabeln (3, 3a) zur kardanischen Kupplung zu entsprechenden Teilen der Transmissionswelle aufweisen.

**Revendications**

1. Transmission pour véhicules automobiles, comportant au moins un essieu moteur avant et un essieu moteur arrière, comprenant

un arbre de transmission avant (8a, 8d), un arbre de transmission arrière (8b, 8c) un carter de transmission (7) d'ou sortent les arbres de transmission avant et arrière et qui reçoit un couple de rotation provenant de l'ensemble moteur-boîte de vitesses (4, 5), un différentiel associé à chaque essieu, comprenant un carter (9) d'où sortent deux arbres d'entraînement (36) pour transmettre le couple de rotation aux roues respectives du véhicule automobile, un train épicycloïdal logé dans le carter (9), pour distribuer le couple entre les deux arbres d'entraînement (36), y compris un déflecteur (25), monté à rotation dans le carter (9), autour d'un axe perpendiculaire au plan longitudinal vertical du véhicule automobile, et une paire d'engrenages hypoïdes (1, 2) consistant en une couronne dentée hypoïde (1) reliée au déflecteur (25) et un pignon hypoïde (2) porté par un arbre (18, 20) supporté à rotation par le carter du différentiel (9), autour d'un axe longitudinal espacé verticalement de l'axe de la couronne dentée hypoïde (1), dans laquelle le différentiel associé à l'essieu avant présente son pignon hypoïde (2) placé à l'arrière de l'axe de la couronne dentée correspondante et espacé vers le haut de l'axe de la couronne dentée (1), caractérisé par la combinaison des caractéristiques suivantes :

    a) les différentiels associés aux essieux du véhicule automobile sont tous identiques entre eux et orientés de façon identique, avec les couronnes dentées (1) toutes placées du même côté par rapport aux pignons (2),

    b) les pignons de tous les différentiels sont espacés vers le haut et l'arrière (par rapport au sens de déplacement du véhicule automobile) par rapport aux axes des couronnes dentées (1) respectives,

    c) l'arbre porte-pignon (18, 20) de chaque différentiel passe à travers la totalité de la longueur du carter (9) du différentiel et présente son extrémité faisant saillie respectivement d'une paroi avant (11) et d'une paroi arrière (12, 14) du carter (9), pour l'accouplement de l'arbre de transmission respectif.

2. Transmission selon la revendication 1, caractérisé en ce que les paires d'engrenages hypoïdes (1, 2) sont disposées de façon que le déplacement en sens avant du véhicule automobile correspond à la rotation en sens anti-horaire des arbres de transmission avant et arrière, lorsqu'on observe de l'avant.

3. Transmission selon la revendication 1, caractérisé en ce que les extrémités de l'arbre porte-pignon (18, 20) faisant saillie du carter (9) du différentiel comportent des moyens pour le raccordement de chapes (3, 3a) servant à l'accouplement à la cardan des parties correspondantes de l'arbre de transmission.

FIG. 2 (PRIOR ART)

FIG. 1 (PRIOR ART)

FIG. 3

FIG. 4

# FIG. 5

# FIG. 6

# FIG. 10

# FIG. 7

EP 0 221 862 B1

FIG. 8

FIG. 9